# EUROPEAN PATENT SPECIFICATION

(11) **EP 3 454 528 B1**
(45) Date of publication and mention of the grant of the patent: **05.08.2020**
(21) Application number: 17812383.2
(22) Date of filing: 17.01.2017
(51) Int. Cl.: H04L 29/08, H04W 4/70, H04W 8/26, H04W 24/02, H04W 12/06

(54) **VERTICAL INDUSTRY USER SYSTEM AND DEVICE, AND METHOD FOR DISTRIBUTING IDENTIFICATION NUMBER**
VERTIKALES INDUSTRIEANWENDERSYSTEM UND VORRICHTUNG SOWIE VERFAHREN ZUR VERTEILUNG VON IDENTIFIKATIONSNUMMERN
SYSTÈME ET DISPOSITIF D'UTILISATEUR D'INDUSTRIE VERTICALE, ET PROCÉDÉ DE DISTRIBUTION DE NUMÉRO D'IDENTIFICATION

(30) Priority: 16.06.2016 CN 201610428154
(43) Date of publication of application: 13.03.2019
(73) Proprietor: Huawei Technologies Co., Ltd., Longgang District Shenzhen, Guangdong 518129 (CN)
(72) Inventor: WU, Rong, Shenzhen Guangdong 518129 (CN); GAN, Lu, Shenzhen Guangdong 518129 (CN); WANG, Haiguang, Shenzhen Guangdong 518129 (CN)
(74) Representative: Pfenning, Meinig & Partner mbB
(86) International application number: PCT/CN2017/071383
(87) International publication number: WO 2017/215265

(56) References cited:
- WO-A1-2012/103954
- CN-A- 103 702 380
- CN-A- 104 106 270
- US-A1- 2013 336 278
- US-A1- 2014 086 144
- ERICSSON ET AL: "Device identifier on the external interface to the MTC Server", 3GPP DRAFT; S2-111220_DEVICE_IDENTIFIER_ON_THE_EXTERNA L_INTERFACE_TO_MTC_SERVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Salt Lake City; 20110221, 26 February 2011 (2011-02-26), XP050524207, [retrieved on 2011-02-26]

## Description

### TECHNICAL FIELD

The present invention relates to the communications field, and in particular, to a vertical industry user system, a device, and an identification number distribution method.

### BACKGROUND

With development of various network services such as remote medical control and meter reading services, there are a growing quantity of vertical industry users, and massive terminals perform access. For example, a vertical industry user may be a corporate user or an individual user, for example, a smart water meter company. The vertical industry user has one or more terminals, such as a smart water meter, a smart electricity meter, an intelligent terminal, an Internet of Things (IoT) device, and another terminal in the Internet of Vehicles or a smart grid.

In a wireless communications network in the prior art, users are mainly mobile network users, and are distinguished between each other and managed by using identification (ID) numbers. An identifier of the mobile network user is an IMSI (International Mobile Subscriber Identity) that mainly includes the following several pieces of identification information:
MCC: Mobile Country Code, mobile country code, used to uniquely identify a country in which a mobile subscriber is located, and including three bits (bits).
MNC: Mobile Network Code, mobile network code, used to effectively identify a category of a recognized operator network, and including two or three bits (bits). Whether the mobile network code includes two bits or three bits depends on different countries, and is determined by the MCC.
MSIN: Mobile Subscriber Identity Number, mobile subscriber identity number, used to identify a specific mobile subscriber in an operator network.
NMSI: National Mobile Subscriber Identity, national mobile subscriber identity, including the MNC and the MSIN.

In the prior art, the IMSI is simply used to identify an identity. Such an ID simply used for identity identification causes inconvenience to data classification and management in a multi-service cross scenario, because basic information included in a terminal ID is in-comprehensive.

WO 2912/103954 concerns obtaining an improvement in how an MTC device can be addressed. An automatic transfer of machine-to-machine device identifier to network external service providers is addressed in US 2014/0086144 A1. Ericsson: *Device Identifier on the external interface to the MTC server*, 3GPP TSG WG2 Meeting #83, Salt Lake City (Utah) USA, 21 - 25 February 2011 discusses the device identifier, required for device triggering and sending SMS, between the MTC server and the mobile operator network.

### SUMMARY

Embodiments of the present invention provide a vertical industry user system and a core network element according to the appended claims, to facilitate data management and classification.

The present invention relates to a problem of how to manage and distinguish between massive identities IDs of a growing quantity of service provider devices (industry users), terminals, and individual users in a future network, especially, in a scenario in which a vertical industry and an operator network coexist.

Elements involved in the to-be-resolved problem mainly include an industry user, an operator network element and a terminal, and may further include an individual user, an identity management server, and the like. The operator network element may include a base station and a network side control entity. The identity management server herein may be understood as a functional entity, and is mainly responsible for distributing and managing a user identity. There may be an independent identity distribution entity. In this specification, the identity distribution entity is uniformly named "identity provider", but is not limited to this name. The identity distribution entity may belong to an operator network side or a service provider network side, or may be a third-party device. The industry user may be a corporate user or an individual user, for example, a smart water meter company. The industry user has one or more terminals, such as a smart water meter, a smart electricity meter, an intelligent terminal, an Internet of Things (IoT) device, and another terminal device in the Internet of Vehicles or a smart grid.

The technical solutions of the present invention may be understood as a service-based identity ID format and a service-based identity ID distribution method. In other words, how to distribute an service-based identity ID and what is included in key information of a corresponding format when a vertical industry network element is added are considered, and how to effectively match an identity ID and a service in a future network environment with massive services is specified. A service-based identity ID complies with a service-centered concept of the future network, and can greatly reduce complexity of managing a user identity by an operator. In addition, the service-based identity ID can be more flexibly used in the future network environment, and is also applicable to an Internet of Things scenario such as IoT.

A first aspect of the embodiments of the present invention particularly provides a vertical industry user system, and the vertical industry user system may include a service provider device, a terminal, a core network element, and a base station. The service provider device described herein may be referred to as an industry user for short, or may be referred to as an individual user in some cases. The core network element has an identity ID distribution function because an identity distribution entity is integrated in the core network element. The service provider device belongs to a service provider network side, and the core network element and the base station belong to an operator network side.

The core network element is configured to: obtain a distribution instruction; and according to the distribution instruction, configure a core network identification number including a first time parameter for the core network element, distribute a provider identification number including a second time parameter to the service provider device, and distribute a base station identification number including a third time parameter to the base station. The distribution instruction herein may be considered as follows: An operator network element receives an instruction that is sent by the service provider device or the terminal for requesting network access for a service. The instruction is received by the base station or the core network element, to trigger the identity distribution entity to distribute an identity ID. In this case, the instruction for requesting network access for a service may be considered as the distribution instruction. Alternatively, a user intends to use a service, and an identity distribution instruction is triggered when the user starts using the service, so that the identity distribution entity obtains the distribution instruction. In this case, the core network element obtains the distribution instruction.

The service provider device is configured to receive the provider identification number.

The base station is configured to receive the base station identification number.

The terminal is configured to receive a terminal identification number including a fourth time parameter distributed by the service provider device, the base station, or the core network element, where the core network identification number includes first service parameter information, the provider identification number includes second service parameter information, the base station identification number includes third service parameter information, and the terminal identification number includes fourth service parameter information.

After different network elements each have an identification number, the network elements may communicate with each other based on respective identities IDs. The communication herein may be a communication operation such as service authentication or network access authentication.

In this embodiment of the present invention, an identification number distribution system is provided, and identity ID distribution is mainly performed by the core network element. After obtaining the distribution instruction, according to the distribution instruction, the core network element configures the core network identification number for the core network element, distributes the provider identification number to the service provider device, and distributes the base station identification number to the base station. The terminal identification number may be distributed by the service provider device, the base station, or the core network element. A feasible solution is provided for this embodiment of the present invention, and each distributed identification number correspondingly includes service parameter information. In this way, during processing of big data, the data can be effectively classified and managed based on the service parameter information, and the service parameter information included in the identification number provides a basis for data processing compared with a prior-art identity ID that is simply used for identity identification.

With reference to the first aspect of the embodiments of the present invention, in a first possible implementation of the first aspect of the embodiments of the present invention,
the core network identification number further includes at least one type of the following information: a first target entity type, a first sequence number, a first mobile country code, a first mobile network code, a first reserved bit, and a first connection sign;
the provider identification number further includes at least one type of the following information: a second target entity type, a second sequence number, a second mobile country code, a second mobile network code, a second reserved bit, and a second connection sign;
the base station identification number further includes at least one type of the following information: a third target entity type, a third sequence number, a third mobile country code, a third mobile network code, a third reserved bit, and a third connection sign; and
the terminal identification number further includes at least one type of the following information: a fourth target entity type, a fourth sequence number, a fourth mobile country code, a fourth mobile network code, a fourth reserved bit, and a fourth connection sign.

It should be understood that each distributed identity ID herein may further include other information such as a mobile subscriber identity number MSIN or a national mobile subscriber identity NMSI. It should be noted that "first", "second", "third", and "fourth" are added before information such as the foregoing service type information, target entity type, sequence number, time parameter, mobile country code, mobile network code, reserved bit, and connection sign for differentiation when the information corresponds to different network elements. In actual application, the foregoing information included in different elements may be the same, or may be different, or may be in a relationship of a set and a subset. No specific limitation is imposed. In addition, the service provider device may further control a quantity of identities IDs distributed to terminals served by the service provider device, and the core network element may also control several pieces of information such as a quantity of distributed identities IDs.

In this embodiment of the present invention, in addition to the service parameter information, information included in each distributed identification number may further include at least one type of the following information: a target entity type, a sequence number, a time parameter, a mobile country code, a mobile network code, a reserved bit, and a connection sign. In this way, in the background of big data, when more information is included in each identification number, the big data is more easily processed during data processing and classification, thereby reducing data processing complexity.

A second aspect related to the embodiments of the present invention provides a vertical industry user system, and the vertical industry user system may include a service provider device, a terminal, a core network element, and a base station. The service provider device described herein may be referred to as an industry user for short, or may be referred to as an individual user in some cases. The service provider device has an identity ID distribution function because an identity distribution entity is integrated in the service provider device. The service provider device belongs to a service provider network side, and the core network element and the base station belong to an operator network side.

The service provider device is configured to: obtain a distribution instruction; and according to the distribution instruction, configure a provider identification number for the service provider device, and distribute a core network identification number to the core network element. The distribution instruction herein may be considered as follows: The service provider device receives an instruction that is sent by the terminal or entered by a user for requesting network access for a service, or the like. The instruction is received by the service provider device, to trigger the identity distribution entity to distribute an identity ID, and the identity distribution entity is integrated in the service provider device. In this case, the instruction for requesting network access for a service may be considered as the distribution instruction. Alternatively, a user intends to use a service, and an identity distribution instruction is triggered when the user starts using the service, so that the identity distribution entity obtains the distribution instruction. In this case, it may be considered that the service provider device obtains the distribution instruction.

The core network element is configured to: receive the core network identification number, and distribute a base station identification number to the base station.

The base station is configured to receive the base station identification number.

The terminal is configured to receive a terminal identification number distributed by the service provider device, the base station, or the core network element, where the core network identification number includes first service parameter information, the provider identification number includes second service parameter information, the base station identification number includes third service parameter information, and the terminal identification number includes fourth service parameter information.

After different network elements each have an identification number, the network elements may communicate with each other based on respective identities IDs. The communication herein may be a communication operation such as service authentication or network access authentication.

In this embodiment of the present invention, identification number distribution is mainly performed by the service provider device. After obtaining the distribution instruction, the service provider device configures the provider identification number for the service provider device, and distributes the core network identification number to the core network element. The terminal identification number of the terminal may be distributed by the service provider device, the base station, or the core network element, and the base station identification number of the base station is distributed by the core network element. A feasible solution for distributing an identification number is provided for this embodiment of the present invention, and each identification number correspondingly includes service parameter information. In this way, during processing of big data, the data can be effectively classified and managed based on the information. In addition, the service provider device distributes an identity ID, so that with reference to the foregoing description in which the core network element distributes an identity ID, an identity ID distribution function can be correspondingly implemented based on different cases.

With reference to the second aspect useful for understanding the embodiments of the present invention, in a first possible implementation of the second aspect,
the core network identification number further includes at least one type of the following information: a first target entity type, a first sequence number, a first time parameter, a first mobile country code, a first mobile network code, a first reserved bit, and a first connection sign;
the provider identification number further includes at least one type of the following information: a second target entity type, a second sequence number, a second time parameter, a second mobile country code, a second mobile network code, a second reserved bit, and a second connection sign;
the base station identification number further includes at least one type of the following information: a third target entity type, a third sequence number, a third time parameter, a third mobile country code, a third mobile network code, a third reserved bit, and a third connection sign; and
the terminal identification number further includes at least one type of the following information: a fourth target entity type, a fourth sequence number, a fourth time parameter, a fourth mobile country code, a fourth mobile network code, a fourth reserved bit, and a fourth connection sign.

It should be understood that each distributed identity ID herein may further include other information such as a mobile subscriber identity number MSIN or a national mobile subscriber identity NMSI. It should be noted that "first", "second", "third", and "fourth" are added before information such as the foregoing service type information, target entity type, sequence number, time parameter, mobile country code, mobile network code, reserved bit, and connection sign for differentiation when the information corresponds to different network elements. In actual application, the foregoing information included in different elements may be the same, or may be different, or may be in a relationship of a set and a subset. No specific limitation is imposed. In addition, the service provider device may further control a quantity of identities IDs distributed to terminals served by the service provider device, and the core network element may also control several pieces of information such as a quantity of distributed identities IDs.

In addition to the service parameter information, information included in each distributed identification number may further include at least one type of the following information: a target entity type, a sequence number, a time parameter, a mobile country code, a mobile network code, a reserved bit, and a connection sign. In this way, in the background of big data, when more information is included in each identification number, the big data is more easily processed during data processing and classification, thereby reducing data processing complexity.

A third aspect useful for understanding the embodiments of the present invention provides a vertical industry user system, and the vertical industry user system may include a service provider device, a terminal, a core network element, a base station, and a third-party device. The service provider device described herein may be referred to as an industry user for short, or may be referred to as an individual user in some cases. The third-party device has an identity ID distribution function because an identity distribution entity is integrated in the third-party device. The service provider device belongs to a service provider network side, and the core network element, the base station, and the third-party device belong to an operator network side.

The third-party device is configured to: obtain a distribution instruction; and according to the distribution instruction, distribute a provider identification number to the service provider device, and distribute a core network identification number to the core network element. The distribution instruction herein may be considered as follows: The third-party device receives an instruction that is sent by the terminal or the service provider device for requesting network access for a service, an instruction that is entered by a user for requesting network access for a service, or the like. The instruction is received by the third-party device, to trigger the identity distribution entity to distribute an identity ID, and the identity distribution entity is integrated in the third-party device. In this case, the instruction for requesting network access for a service may be considered as the distribution instruction. Alternatively, a user intends to use a service, and an identity distribution instruction is triggered when the user starts using the service, so that the identity distribution entity obtains the distribution instruction. In this case, it may be considered that the third-party device obtains the distribution instruction.

The service provider device is configured to receive the provider identification number.

The core network element is configured to: receive the core network identification number, and distribute a base station identification number to the base station.

The base station is configured to receive the base station identification number.

The terminal is configured to receive a terminal identification number distributed by the service provider device, the base station, or the core network element, where the core network identification number includes first service parameter information, the provider identification number includes second service parameter information, the base station identification number includes third service parameter information, and the terminal identification number includes fourth service parameter information.

After different network elements each have an identification number, the network elements may communicate with each other based on respective identities IDs. The communication herein may be a communication operation such as service authentication or network access authentication.

In this aspect useful for understanding of the present invention, the vertical industry user system is provided, and identity ID distribution is mainly performed by the third-party device. A feasible solution is further provided for distributing an identity ID. After obtaining the distribution instruction, the third-party device distributes the provider identification number to the service provider device, and distributes the core network identification number to the core network element. Each identification number correspondingly includes service parameter information. In this way, during processing of big data, the data can be effectively classified and managed based on the information. In addition, the service provider device distributes an identity ID, so that with reference to the foregoing description in which the core network element or the service provider device distributes an identity ID, an identity ID distribution function can be correspondingly implemented based on different cases.

With reference to the third aspect useful for understanding the embodiments of the present invention, in a first possible implementation of the third aspect,
the core network identification number further includes at least one type of the following information: a first target entity type, a first sequence number, a first time parameter, a first mobile country code, a first mobile network code, a first reserved bit, and a first connection sign;
the provider identification number further includes at least one type of the following information: a second target entity type, a second sequence number, a second time parameter, a second mobile country code, a second mobile network code, a second reserved bit, and a second connection sign;
the base station identification number further includes at least one type of the following information: a third target entity type, a third sequence number, a third time parameter, a third mobile country code, a third mobile network code, a third reserved bit, and a third connection sign; and
the terminal identification number further includes at least one type of the following information: a fourth target entity type, a fourth sequence number, a fourth time parameter, a fourth mobile country code, a fourth mobile network code, a fourth reserved bit, and a fourth connection sign.

It should be understood that each distributed identity ID herein may further include other information such as a mobile subscriber identity number MSIN or a national mobile subscriber identity NMSI. It should be noted that "first", "second", "third", and "fourth" are added before information such as the foregoing service type information, target entity type, sequence number, time parameter, mobile country code, mobile network code, reserved bit, and connection sign for differentiation when the information corresponds to different network elements. In actual application, the foregoing information included in different elements may be the same, or may be different, or may be in a relationship of a set and a subset. No specific limitation is imposed. In addition, the service provider device may further control a quantity of identities IDs distributed to terminals served by the service provider device, and the core network element may also control several pieces of information such as a quantity of distributed identities IDs.

In addition to the service parameter information, information included in each distributed identification number may further include at least one type of the following information: a target entity type, a sequence number, a time parameter, a mobile country code, a mobile network code, a reserved bit, and a connection sign. In this way, in the background of big data, when more information is included in each identification number, the big data is more easily processed during data processing and classification, thereby reducing data processing complexity.

A fourth aspect of the embodiments of the present invention provides a core network element, where the core network element is configured to be applied to a vertical industry user system, the vertical industry user system includes a service provider device, a terminal, the core network element, and a base station, and the core network element particularly includes:
an obtaining unit, configured to obtain a distribution instruction; and
a distribution unit, configured to: according to the distribution instruction, configure a core network identification number for the core network element, distribute a provider identification number to the service provider device, and distribute a base station identification number to the base station, where the core network identification number includes first service parameter information and a first time parameter, the provider identification number includes second service parameter information and a second time parameter, and the base station identification number includes third service parameter information and a third time parameter.

With reference to the fourth aspect of the embodiments of the present invention, in a first possible implementation of the fourth aspect of the embodiments of the present invention,
the core network identification number further includes at least one type of the following information: a first target entity type, a first sequence number, a first mobile country code, a first mobile network code, a first reserved bit, and a first connection sign;
the provider identification number further includes at least one type of the following information: a second target entity type, a second sequence number, a second mobile country code, a second mobile network code, a second reserved bit, and a second connection sign; and
the base station identification number further includes at least one type of the following information: a third target entity type, a third sequence number, a third mobile country code, a third mobile network code, a third reserved bit, and a third connection sign.

A fifth aspect useful for understanding the embodiments of the present invention provides a service provider device, where the service provider device is applied to a vertical industry user system, the vertical industry user system includes the service provider device, a terminal, a core network element, and a base station, and the service provider device includes:
an obtaining unit, configured to obtain a distribution instruction; and
a distribution unit, configured to: according to the distribution instruction, configure a provider identification number for the service provider device, distribute a core network identification number to the core network element, and distribute a terminal identification number to the terminal, where the core network identification number includes first service parameter information, the provider identification number includes second service parameter information, and the terminal identification number includes fourth service parameter information.

With reference to the fifth aspect useful for understanding the embodiments of the present invention, in a first possible implementation of the fifth aspect,
the core network identification number further includes at least one type of the following information: a first target entity type, a first sequence number, a first time parameter, a first mobile country code, a first mobile network code, a first reserved bit, and a first connection sign;
the provider identification number further includes at least one type of the following information: a second target entity type, a second sequence number, a second time parameter, a second mobile country code, a second mobile network code, a second reserved bit, and a second connection sign; and
the terminal identification number further includes at least one type of the following information: a fourth target entity type, a fourth sequence number, a fourth time parameter, a fourth mobile country code, a fourth mobile network code, a fourth reserved bit, and a fourth connection sign.

A sixth aspect useful for understanding the embodiments of the present invention provides a third-party device, where the third-party device is applied to a vertical industry user system, the vertical industry user system includes a service provider device, a terminal, a core network element, a base station, and the third-party device, and the third-party device includes:
an obtaining unit, configured to obtain a distribution instruction; and
a distribution unit, configured to: according to the distribution instruction, distribute a provider identification number to the service provider device, and distribute a core network identification number to the core network element, where the core network identification number includes first service parameter information, and the provider identification number includes second service parameter information.

With reference to the sixth aspect useful for understanding the embodiments of the present invention, in a first possible implementation of the sixth aspect,
the core network identification number further includes at least one type of the following information: a first target entity type, a first sequence number, a first time parameter, a first mobile country code, a first mobile network code, a first reserved bit, and a first connection sign; and
the provider identification number further includes at least one type of the following information: a second target entity type, a second sequence number, a second time parameter, a second mobile country code, a second mobile network code, a second reserved bit, and a second connection sign.

A seventh aspect useful for understanding the embodiments of the present invention provides an identification number distribution method, where the method is applied to a vertical industry user system, and the vertical industry user system includes a service provider device, a terminal, a core network element, and a base station. The service provider device described herein may be referred to as an industry user for short, or may be referred to as an individual user in some cases. The core network element has an identity ID distribution function because an identity distribution entity is integrated in the core network element. The service provider device belongs to a service provider network side, and the core network element and the base station belong to an operator network side. The following steps may be included.

The core network element obtains a distribution instruction. The distribution instruction herein may be considered as follows: An operator network element receives an instruction that is sent by the service provider device or the terminal for requesting network access for a service. The instruction is received by the base station or the core network element, to trigger the identity distribution entity to distribute an identity ID. In this case, the instruction for requesting network access for a service may be considered as the distribution instruction. Alternatively, a user intends to use a service, and an identity distribution instruction is triggered when the user starts using the service, so that the identity distribution entity obtains the distribution instruction. In this case, the core network element obtains the distribution instruction.

According to the distribution instruction, the core network element configures a core network identification number for the core network element, distributes a provider identification number to the service provider device, and distributes a base station identification number to the base station, where the core network identification number includes first service parameter information, the provider identification number includes second service parameter information, and the base station identification number includes third service parameter information.

After different network elements each have an identification number, the network elements may communicate with each other based on respective identities IDs. The communication herein may be a communication operation such as service authentication or network access authentication.

In this aspect useful for understanding the present invention, identity ID distribution is performed by the core network element. After obtaining the distribution instruction, according to the distribution instruction, the core network element configures the core network identification number for the core network element, distributes the provider identification number to the service provider device, and distributes the base station identification number to the base station. The terminal identification number may be distributed by the service provider device, the base station, or the core network element. A feasible solution is provided for this embodiment of the present invention, and each distributed identification number correspondingly includes service parameter information. In this way, during processing of big data, the data can be effectively classified and managed based on the service parameter information, and the service parameter information included in the identification number provides a basis for data processing compared with a prior-art identity ID that is simply used for identity identification.

With reference to the seventh aspect useful for understanding the embodiments of the present invention, in a first possible implementation of the seventh aspect,
the core network identification number further includes at least one type of the following information: a first target entity type, a first sequence number, a first time parameter, a first mobile country code, a first mobile network code, a first reserved bit, and a first connection sign;
the provider identification number further includes at least one type of the following information: a second target entity type, a second sequence number, a second time parameter, a second mobile country code, a second mobile network code, a second reserved bit, and a second connection sign; and
the base station identification number further includes at least one type of the following information: a third target entity type, a third sequence number, a third time parameter, a third mobile country code, a third mobile network code, a third reserved bit, and a third connection sign.

It should be understood that each distributed identity ID herein may further include other information such as a mobile subscriber identity number MSIN or a national mobile subscriber identity NMSI. It should be noted that "first", "second", "third", and "fourth" are added before information such as the foregoing service type information, target entity type, sequence number, time parameter, mobile country code, mobile network code, reserved bit, and connection sign for differentiation when the information corresponds to different network elements. In actual application, the foregoing information included in different elements may be the same, or may be different, or may be in a relationship of a set and a subset. No specific limitation is imposed. In addition, the service provider device may further control a quantity of identities IDs distributed to terminals served by the service provider device, and the core network element may also control several pieces of information such as a quantity of distributed identities IDs.

In this aspect useful for understanding the present invention, in addition to the service parameter information, information included in each distributed identification number may further include at least one type of the following information: a target entity type, a sequence number, a time parameter, a mobile country code, a mobile network code, a reserved bit, and a connection sign. In this way, in the background of big data, when more information is included in each identification number, the big data is more easily processed based on the information during data processing and classification, thereby reducing data processing complexity.

An eighth aspect useful for understanding the embodiments of the present invention provides an identification number distribution method, where the method is applied to a vertical industry user system, and the vertical industry user system includes a service provider device, a terminal, a core network element, and a base station. The service provider device described herein may be referred to as an industry user for short, or may be referred to as an individual user in some cases. The service provider device has an identity ID distribution function because an identity distribution entity is integrated in the service provider device. The service provider device belongs to a service provider network side, and the core network element and the base station belong to an operator network side. The following steps may be included.

The service provider device obtains a distribution instruction. The distribution instruction herein may be considered as follows: The service provider device receives an instruction that is sent by the terminal or entered by a user for requesting network access for a service, or the like. The instruction is received by the service provider device, to trigger the identity distribution entity to distribute an identity ID, and the identity distribution entity is integrated in the service provider device. In this case, the instruction for requesting network access for a service may be considered as the distribution instruction. Alternatively, a user intends to use a service, and an identity distribution instruction is triggered when the user starts using the service, so that the identity distribution entity obtains the distribution instruction. In this case, it may be considered that the service provider device obtains the distribution instruction.

According to the distribution instruction, the service provider device configures a provider identification number for the service provider device, distributes a core network identification number to the core network element, and distributes a terminal identification number to the terminal, where the core network identification number includes first service parameter information, the provider identification number includes second service parameter information, and the terminal identification number includes fourth service parameter information.

After different network elements each have an identification number, the network elements may communicate with each other based on respective identities IDs. The communication herein may be a communication operation such as service authentication or network access authentication.

In this aspect useful for understanding the present invention, identity ID distribution is performed by the service provider device. After obtaining the distribution instruction, the service provider device configures the provider identification number for the service provider device, distributes the core network identification number to the core network element, and distributes the terminal identification number to the terminal. The base station identification number of the base station may be distributed by the core network element. A feasible solution is provided for distributing an identity ID, and each identification number correspondingly includes service parameter information. In this way, during processing of big data, the data can be effectively classified and managed based on the information. In addition, the service provider device distributes an identity ID, so that with reference to the foregoing description in which the core network element distributes an identity ID, an identity ID distribution function can be correspondingly implemented based on different cases.

With reference to the eighth aspect useful for understanding the embodiments of the present invention, in a first possible implementation of the eighth aspect,
the core network identification number further includes at least one type of the following information: a first target entity type, a first sequence number, a first time parameter, a first mobile country code, a first mobile network code, a first reserved bit, and a first connection sign;
the provider identification number further includes at least one type of the following information: a second target entity type, a second sequence number, a second time parameter, a second mobile country code, a second mobile network code, a second reserved bit, and a second connection sign; and
the terminal identification number further includes at least one type of the following information: a fourth target entity type, a fourth sequence number, a fourth time parameter, a fourth mobile country code, a fourth mobile network code, a fourth reserved bit, and a fourth connection sign.

It should be understood that each distributed identity ID herein may further include other information such as a mobile subscriber identity number MSIN or a national mobile subscriber identity NMSI. It should be noted that "first", "second", "third", and "fourth" are added before information such as the foregoing service type information, target entity type, sequence number, time parameter, mobile country code, mobile network code, reserved bit, and connection sign for differentiation when the information corresponds to different network elements. In actual application, the foregoing information included in different elements may be the same, or may be different, or may be in a relationship of a set and a subset. No specific limitation is imposed. In addition, the service provider device may further control a quantity of identities IDs distributed to terminals served by the service provider device, and the core network element may also control several pieces of information such as a quantity of distributed identities IDs.

In this aspect useful for understanding the present invention, in addition to the service parameter information, information included in each distributed identification number may further include at least one type of the following information: a target entity type, a sequence number, a time parameter, a mobile country code, a mobile network code, a reserved bit, and a connection sign. In this way, in the background of big data, when more information is included in each identification number, the big data is more easily processed based on the information during data processing and classification, thereby reducing data processing complexity.

A ninth aspect useful for understanding the embodiments of the present invention provides an identification number distribution method, where the method is applied to a vertical industry user system, the vertical industry user system includes a service provider device, a terminal, a core network element, a base station, and a third-party device. The service provider device described herein may be referred to as an industry user for short, or may be referred to as an individual user in some cases. The third-party device has an identity ID distribution function because an identity distribution entity is integrated in the third-party device. The service provider device belongs to a service provider network side, and the core network element, the base station, and the third-party device belong to an operator network side. The following steps may be included.

The third-party device obtains a distribution instruction. The distribution instruction herein may be considered as follows: The third-party device receives an instruction that is sent by the terminal or the service provider device for requesting network access for a service, an instruction that is entered by a user for requesting network access for a service, or the like. The instruction is received by the third-party device, to trigger the identity distribution entity to distribute an identity ID, and the identity distribution entity is integrated in the third-party device. In this case, the instruction for requesting network access for a service may be considered as the distribution instruction. Alternatively, a user intends to use a service, and an identity distribution instruction is triggered when the user starts using the service, so that the identity distribution entity obtains the distribution instruction. In this case, it may be considered that the third-party device obtains the distribution instruction.

According to the distribution instruction, the third-party device distributes a provider identification number to the service provider device, and distributes a core network identification number to the core network element, where the core network identification number includes first service parameter information, and the provider identification number includes second service parameter information.

After different network elements each have an identification number, the network elements may communicate with each other based on respective identities IDs. The communication herein may be a communication operation such as service authentication or network access authentication.

In this aspect useful for understanding the present invention, identity ID distribution is performed by the third-party device. A feasible solution is further provided for distributing an identity ID. After obtaining the distribution instruction, the third-party device distributes the provider identification number to the service provider device, and distributes the core network identification number to the core network element. Each identification number correspondingly includes service parameter information. In this way, during processing of big data, the data can be effectively classified and managed based on the information. In addition, the service provider device distributes an identity ID, so that with reference to the foregoing description in which the core network element or the service provider device distributes an identity ID, an identity ID distribution function can be correspondingly implemented based on different cases.

With reference to the ninth aspect useful for understanding the embodiments of the present invention, in a first possible implementation of the ninth aspect,
the core network identification number further includes at least one type of the following information: a first target entity type, a first sequence number, a first time parameter, a first mobile country code, a first mobile network code, a first reserved bit, and a first connection sign; and
the provider identification number further includes at least one type of the following information: a second target entity type, a second sequence number, a second time parameter, a second mobile country code, a second mobile network code, a second reserved bit, and a second connection sign.

It should be understood that each distributed identity ID herein may further include other information such as a mobile subscriber identity number MSIN or a national mobile subscriber identity NMSI. It should be noted that "first", "second", "third", and "fourth" are added before information such as the foregoing service type information, target entity type, sequence number, time parameter, mobile country code, mobile network code, reserved bit, and connection sign for differentiation when the information corresponds to different network elements. In actual application, the foregoing information included in different elements may be the same, or may be different, or may be in a relationship of a set and a subset. No specific limitation is imposed. In addition, the service provider device may further control a quantity of identities IDs distributed to terminals served by the service provider device, and the core network element may also control several pieces of information such as a quantity of distributed identities IDs.

In this aspect useful for understanding the present invention, in addition to the service parameter information, information included in each distributed identification number may further include at least one type of the following information: a target entity type, a sequence number, a time parameter, a mobile country code, a mobile network code, a reserved bit, and a connection sign. In this way, in the background of big data, when more information is included in each identification number, the big data is more easily processed based on the information during data processing and classification, thereby reducing data processing complexity.

A tenth aspect useful for understanding the embodiments of the present invention provides a core network element, where the core network element is applied to a vertical industry user system, the vertical industry user system includes a service provider device, a terminal, the core network element, and a base station, and the core network element includes:
a transceiver, configured to obtain a distribution instruction; and
a processor, configured to: according to the distribution instruction, configure a core network identification number for the core network element, distribute a provider identification number to the service provider device, and distribute a base station identification number to the base station, where the core network identification number includes first service parameter information, the provider identification number includes second service parameter information, and the base station identification number includes third service parameter information.

An eleventh aspect useful for understanding the embodiments of the present invention provides a service provider device, where the service provider device is applied to a vertical industry user system, the vertical industry user system includes the service provider device, a terminal, a core network element, and a base station, and the service provider device includes:
a transceiver, configured to obtain a distribution instruction; and
a processor, configured to: according to the distribution instruction, configure a provider identification number for the service provider device, distribute a core network identification number to the core network element, and distribute a terminal identification number to the terminal, where the core network identification number includes first service parameter information, the provider identification number includes second service parameter information, and the terminal identification number includes fourth service parameter information.

A twelfth aspect useful for understanding the embodiments of the present invention provides a third-party device, where the third-party device is applied to a vertical industry user system, the vertical industry user system includes a service provider device, a terminal, a core network element, and a base station, and the third-party device includes:
a transceiver, configured to obtain a distribution instruction; and
a processor, configured to: according to the distribution instruction, distribute a provider identification number to the service provider device, and distribute a core network identification number to the core network element, where the core network identification number includes first service parameter information, and the provider identification number includes second service parameter information.

A thirteenth aspect useful for understanding the embodiments of the present invention provides an identification number distribution method, where the method is applied to a vertical industry user system, and the vertical industry user system includes a service provider device, a terminal, a core network element, a base station, and an identity distribution entity. The service provider device described herein may be referred to as an industry user for short, or may be referred to as an individual user in some cases. The identity distribution entity may be used as an entity for implementing an identity ID distribution function, and may belong to a service provider network side or an operator network side. The service provider device belongs to the service provider network side, and the core network element and the base station belong to the operator network side. The following steps may be included.

The identity distribution entity obtains a distribution instruction. The distribution instruction herein may be considered as follows: An operator network element receives an instruction that is sent by the service provider device or the terminal for requesting network access for a service. The instruction is received by the base station or the core network element, to trigger the identity distribution entity to distribute an identity ID. In this case, the instruction for requesting network access for a service may be considered as the distribution instruction. Alternatively, a user intends to use a service, and an identity distribution instruction is triggered when the user starts using the service, so that the identity distribution entity obtains the distribution instruction.

According to the distribution instruction, the identity distribution entity distributes a provider identification number to the service provider device, and distributes a core network identification number to the core network element, where the core network identification number includes first service parameter information, and the provider identification number includes second service parameter information.

After different network elements each have an identification number, the network elements may communicate with each other based on respective identities IDs. The communication herein may be a communication operation such as service authentication or network access authentication.

With reference to the thirteenth aspect useful for understanding the embodiments of the present invention, in a first possible implementation of the thirteenth aspect,
the core network identification number further includes at least one type of the following information: a first target entity type, a first sequence number, a first time parameter, a first mobile country code, a first mobile network code, a first reserved bit, and a first connection sign; and
the provider identification number further includes at least one type of the following information: a second target entity type, a second sequence number, a second time parameter, a second mobile country code, a second mobile network code, a second reserved bit, and a second connection sign.

It should be understood that each distributed identity ID herein may further include other information such as a mobile subscriber identity number MSIN or a national mobile subscriber identity NMSI. It should be noted that "first" and "second" are added before information such as the foregoing service type information, target entity type, sequence number, time parameter, mobile country code, mobile network code, reserved bit, and connection sign for differentiation when the information corresponds to different network elements. In actual application, the foregoing information included in different elements may be the same, or may be different, or may be in a relationship of a set and a subset. No specific limitation is imposed. In addition, the service provider device may further control a quantity of identities IDs distributed to terminals served by the service provider device, and the core network element may also control several pieces of information such as a quantity of distributed identities IDs.

A fourteenth aspect useful for understanding the present invention provides an identity distribution entity, where the identity distribution entity is applied to a vertical industry user system, the vertical industry user system includes a service provider device, a terminal, a core network element, a base station, and the identity distribution entity, and the identity distribution entity includes:
an obtaining unit, configured to obtain a distribution instruction; and
a distribution unit, configured to: according to the distribution instruction, distribute a provider identification number to the service provider device, and distribute a core network identification number to the core network element, where the core network identification number includes first service parameter information, and the provider identification number includes second service parameter information.

With reference to the fourteenth aspect useful for understanding the embodiments of the present invention, in a first possible implementation of the fourteenth aspect,
the core network identification number further includes at least one type of the following information: a first target entity type, a first sequence number, a first time parameter, a first mobile country code, a first mobile network code, a first reserved bit, and a first connection sign; and
the provider identification number further includes at least one type of the following information: a second target entity type, a second sequence number, a second time parameter, a second mobile country code, a second mobile network code, a second reserved bit, and a second connection sign.

A fifteenth aspect useful for understanding the present invention further provides a vertical industry user system, and the vertical industry user system may include a service provider device, a terminal, a core network element, a base station, and an identity distribution entity. The service provider device described herein may be referred to as an industry user for short, or may be referred to as an individual user in some cases. The identity distribution entity may be used as an entity for implementing an identity ID distribution function, and may belong to a service provider network side or an operator network side. The service provider device belongs to the service provider network side, and the core network element and the base station belong to the operator network side. The following steps may be included.

The identity distribution entity is configured to: obtain a distribution instruction; and according to the distribution instruction, distribute a provider identification number to the service provider device, and distribute a core network identification number to the core network element.

The service provider device is configured to receive the provider identification number.

The core network element is configured to: receive the core network identification number, and distribute a base station identification number to the base station.

The base station is configured to receive the base station identification number.

The terminal is configured to receive a terminal identification number distributed by the service provider device, the base station, or the core network element, where the core network identification number includes first service parameter information, the provider identification number includes second service parameter information, the base station identification number includes third service parameter information, and the terminal identification number includes fourth service parameter information.

With reference to the fifteenth aspect useful for understanding the embodiments of the present invention, in a first possible implementation of the fifteenth aspect,
the core network identification number further includes at least one type of the following information: a first target entity type, a first sequence number, a first time parameter, a first mobile country code, a first mobile network code, a first reserved bit, and a first connection sign;
the provider identification number further includes at least one type of the following information: a second target entity type, a second sequence number, a second time parameter, a second mobile country code, a second mobile network code, a second reserved bit, and a second connection sign;
the base station identification number further includes at least one type of the following information: a third target entity type, a third sequence number, a third time parameter, a third mobile country code, a third mobile network code, a third reserved bit, and a third connection sign; and
the terminal identification number further includes at least one type of the following information: a fourth target entity type, a fourth sequence number, a fourth time parameter, a fourth mobile country code, a fourth mobile network code, a fourth reserved bit, and a fourth connection sign.

It should be understood that each distributed identity ID herein may further include other information such as a mobile subscriber identity number MSIN or a national mobile subscriber identity NMSI. It should be noted that "first", "second", "third", and "fourth" are added before information such as the foregoing service type information, target entity type, sequence number, time parameter, mobile country code, mobile network code, reserved bit, and connection sign for differentiation when the information corresponds to different network elements. In actual application, the foregoing information included in different elements may be the same, or may be different, or may be in a relationship of a set and a subset. No specific limitation is imposed. In addition, the service provider device may further control a quantity of identities IDs distributed to terminals served by the service provider device, and the core network element may also control several pieces of information such as a quantity of distributed identities IDs.

A sixteenth aspect useful for understanding the embodiments of the present invention provides a storage medium. It should be noted that the technical solutions of the present invention essentially, or a part contributing to the prior art, or all or a part of the technical solutions may be implemented in a form of a software product. A computer software product is stored in the storage medium, configured to store a computer software instruction used by the foregoing device, and the computer software instruction includes a program designed for the device for executing the fourth aspect, the fifth aspect, or the sixth aspect.

The storage medium includes any medium that can store program code, such as a USB flash drive, a removable hard disk, a read-only memory (ROM, Read-Only Memory), a random access memory (RAM, Random Access Memory), a magnetic disk, or an optical disc.

It may be learned from the foregoing technical solutions that the embodiments of the present invention have the following advantages:

In the embodiments of the present invention, the vertical industry user system includes the service provider device, the terminal, the core network element, and the base station. The core network element is configured to: obtain the distribution instruction; and according to the distribution instruction, configure the core network identification number for the core network element, distribute the provider identification number to the service provider device, and distribute the base station identification number to the base station. The service provider device is configured to receive the provider identification number. The base station is configured to receive the base station identification number. The terminal is configured to receive the terminal identification number distributed by the service provider device, the base station, or the core network element, where the core network identification number includes the first service parameter information, the provider identification number includes the second service parameter information, the base station identification number includes the third service parameter information, and the terminal identification number includes the fourth service parameter information. In addition to identity identification information, each identity ID further includes service parameter information. In this way, in the background of big data, the data is more conveniently classified and managed based on different information included in identification numbers, thereby reducing data management complexity.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is an architectural diagram of a system according to an embodiment of the present invention;
FIG. 2 is a schematic diagram of a vertical industry user system according to an embodiment of the present invention;
FIG. 3 is another schematic diagram of a vertical industry user system according to an embodiment of the present invention;
FIG. 4 is another schematic diagram of a vertical industry user system according to an embodiment of the present invention;
FIG. 5 is a schematic diagram of an embodiment of an identification number distribution method according to an embodiment of the present invention;
FIG. 6 is a schematic diagram of another embodiment of an identification number distribution method according to an embodiment of the present invention;
FIG. 7 is a schematic diagram of another embodiment of an identification number distribution method according to an embodiment of the present invention;
FIG. 8 is a schematic diagram of an embodiment of a core network element according to an embodiment of the present invention;
FIG. 9 is a schematic diagram of an embodiment of a service provider device according to an embodiment of the present invention;
FIG. 10 is a schematic diagram of an embodiment of a third-party device according to an embodiment of the present invention;
FIG. 11 is a schematic diagram of another embodiment of a core network element according to an embodiment of the present invention;
FIG. 12 is a schematic diagram of another embodiment of a service provider device according to an embodiment of the present invention; and
FIG. 13 is a schematic diagram of another embodiment of a third-party device according to an embodiment of the present invention.

### DESCRIPTION OF EMBODIMENTS

Embodiments of the present invention provide an identification number distribution method and a first device, to effectively manage user identities, thereby reducing data management complexity in the background of big data.

To make persons skilled in the art understand the technical solutions in the present invention better, the following clearly describes the technical solutions in the embodiments of the present invention with reference to the accompanying drawings in the embodiments of the present invention. Apparently, the described embodiments are merely some rather than all of the embodiments of the present invention. All other embodiments obtained by persons of ordinary skill in the art based on the embodiments of the present invention without creative efforts shall fall within the protection scope of the present invention.

With rapid development of the information technology (Information Technology, IT) industry, types of network services become diversified, for example, remote medical control and meter reading services. Under this trend, there are a growing quantity of vertical industry users, and massive user devices perform access. A network needs to provide various services for users quickly and securely. Therefore, how to identify and manage an identity of each device based on a service has become an important requirement.

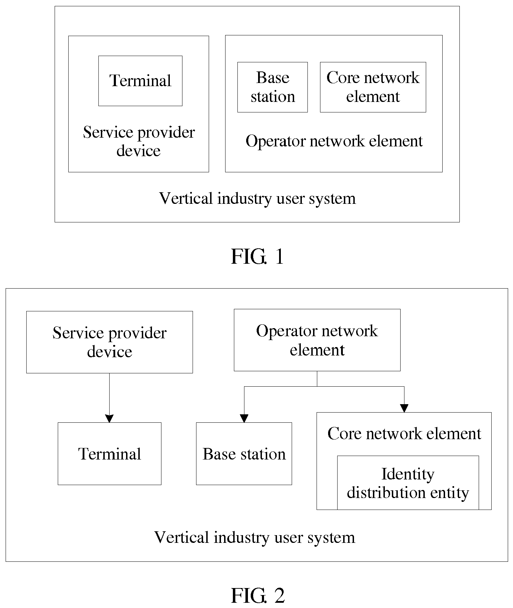

An architectural diagram of a system provided in the technical solutions of the present invention is shown in FIG. 1. The system includes a service provider device, a terminal, and an operator network element, and the operator network element further includes other network elements such as a core network element and a base station. It should be noted that in FIG. 1, the terminal is classified into a service provider device side. Actually, the terminal may alternatively belong to an operator side. This is specifically described in the following description.

The technical solutions of the present invention are applied to a vertical industry user system. FIG. 2 is a schematic diagram of a vertical industry user system according to an embodiment of the present invention. The vertical industry user system includes a service provider device, a terminal, a core network element, and a base station. The core network element has an identity ID distribution function because an identity distribution entity is integrated in the core network element. The service provider device belongs to a service provider network side, and the core network element and the base station belong to an operator network side.

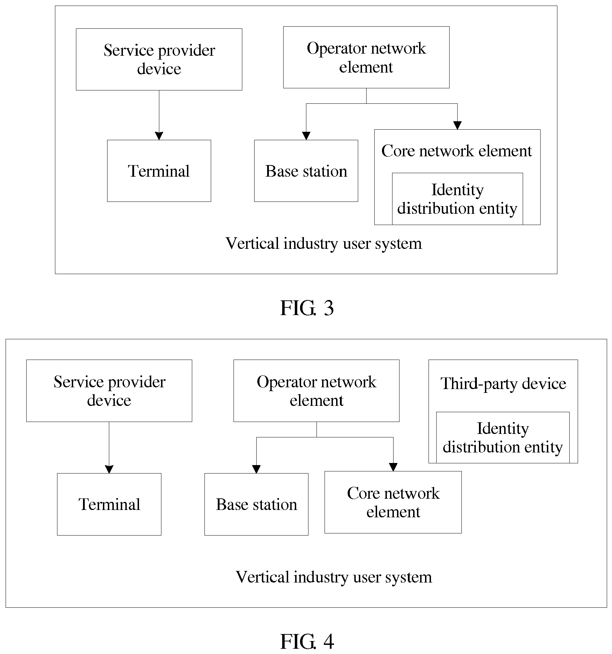

FIG. 3 is another schematic diagram of a vertical industry user system according to an embodiment of the present invention. The vertical industry user system includes a service provider device, a terminal, a core network element, and a base station. The service provider device has an identity ID distribution function because an identity distribution entity is integrated in the service provider device. The service provider device belongs to a service provider network side, and the core network element and the base station belong to an operator network side.

FIG. 4 is another schematic diagram of a vertical industry user system according to an embodiment of the present invention. The vertical industry user system includes a service provider device, a terminal, a core network element, a base station, and a third-party device. The third-party device has an identity ID distribution function because an identity distribution entity is integrated in the third-party device. The service provider device belongs to a service provider network side, the core network element and the base station belong to an operator network side, and the third-party device herein also belongs to the operator network side. It should be noted that the third-party device is characterized by high reliability or high confidentiality.

It should be noted that the vertical industry user systems shown in FIG. 2, FIG. 3, and FIG. 4 are only schematic diagrams of a vertical industry user system. In actual application, other schematic diagrams may be obtained through extension based on different actual requirements. The terminal may belong to the service provider network side or the operator network side based on a specific situation. For example, a terminal on the service provider network side is usually a device such as a smart water meter or a smart electricity meter, and a terminal on the operator network side is usually a device such as a mobile phone. A specific quantity of terminals is not limited. Usually, the identity distribution entity described herein is integrated in the core network element, the service provider device, or the third-party device to implement an identity ID distribution function, but the identity ID distribution function may also be implemented by the identity distribution entity as an independent entity or in another manner.

The following briefly describes functions of each functional entity shown in FIG. 1, FIG. 2, FIG. 3, and FIG. 4.

The identity distribution entity, whose English full name is "identity provider", is an abstract functional entity and is mainly configured to distribute an identity ID of each interaction network element, and may belong to the service provider network side or the operator network side.

The service provider device may also be referred to as an industry user for short, and is mainly a user in a vertical industry service network, for example, an enterprise organization or a company such as an electricity meter company, a water meter company, or a logistics company. The service provider device has a plurality of service devices. The service provider device may further include an individual user, for example, a terminal user, and the terminal user has one or more terminals.

The operator network element includes the core network element, such as a mobility management entity (Mobility Management Entity, MME), a home subscriber server (Home Subscriber Server, HSS), a controller (Controller), a control node, a gateway, or a server, or may be a logical entity integrated on such a network element.

The terminal is a single network element that needs to be served, and may be a device such as a mobile phone, an electricity meter, a remote control terminal, or a water meter.

The base station is a radio access node, or may be an anchor or a controller accessing a control plane, and the base station is also an operator network element.

The third-party device may be a device in a government organization or an organization recognized with high confidentiality, high security, and high reliability, for example, a Public Security Bureau, a bank, a central organization that issues a certificate, an army, or an archives office.

An overall overview of identification number distribution is first provided before specific embodiments are described.

In the embodiments of the present invention, a process of distributing an identity ID to each network element according to the distribution instruction is mainly described. Specifically, a core network identification number is distributed to a core network element, a provider identification number is distributed to a service provider device, a base station identification number is distributed to a base station, and a terminal identification number is distributed to a terminal. Each distributed identity ID may include at least one type of the following information: a service parameter, a target entity type, a sequence number, valid time, distribution time, a reserved bit, and a connection sign, and may further include other information such as a mobile country code MCC, a mobile network code MNC, a mobile subscriber identity number MSIN, or a national mobile subscriber identity NMSI.

For example, the information included in the distributed identity ID is shown in Table 1.

**Table 1**

| | | | | | | | |
|---|---|---|---|---|---|---|---|
| Target entity type | Mobile country code | Mobile network code | Service parameter | Sequence number | Valid time | Time parameter | Reserved bit |

The target entity type may be an identifier or a name of a corresponding network element, and may be set to two or more bits. This depends on a network scenario. Different values identify different identities IDs, so as to identify identity ID types. The target entity type is mainly used to distinguish between an identity ID of the service provider device and an identity ID of the operator network element. For example, identities IDs of the operator network element may be classified into a server identity ID, a gateway identity ID, a router identity ID, a controller identity ID, and the like, and may be distinguished between each other by setting bit (bit) values.

The mobile country code (MCC, Mobile Country Code) is used to uniquely identify a country in which a mobile subscriber is located, and includes three bits (bits). The mobile network code (MNC, Mobile Network Code) is used to effectively identify a category of a recognized operator network, and includes two or three bits (bits). Whether the mobile network code includes two bits or three bits depends on different countries, and is determined by the MCC.

The service parameter is used to identify information such as a used service type, a service name, and a service provider. The service type may be a type of service that a device is to perform, or may be obtained through classification based on services provided by an operator for a user. The sequence number identifies an identification number distribution sequence, and may be used for statistics collection. The time parameter may be valid time, distribution time, or expiry time of the identity ID.

It should be noted that the information included in the distributed identity ID includes but is not limited to the foregoing content. Similarly, a sequence is not limited to the sequence shown in Table 1. A time sequence of distributing the core network identification number to the core network element and distributing the provider identification number to the service provider device is not limited. The two operations may be simultaneously performed or may be successively performed. After a procedure of distributing an identity ID to each network element is completed, other operations such as network access authentication and service authentication may be performed based on the identity ID. In addition, a quantity of distributed identities IDs may also be limited in a particular scenario. For example, two identities IDs may be distributed to a same device, so that after one identity ID fails, a candidate identity ID is enabled; or a corresponding security parameter needs to be generated based on a particular quantity of identities IDs, for example, a key and a candidate key.

In the embodiments of the present invention, each identification number includes lots of information. In this way, during processing of big data, the data can be specifically classified and managed based on the information, thereby improving a data processing capability.

The following describes the technical solutions of the present invention in detail by using embodiments. The following provides several feasible solutions for an identity ID distribution process, and an identity ID of each network element may be flexibly distributed based on actual applications in which the identity distribution entity is integrated in different scenarios.

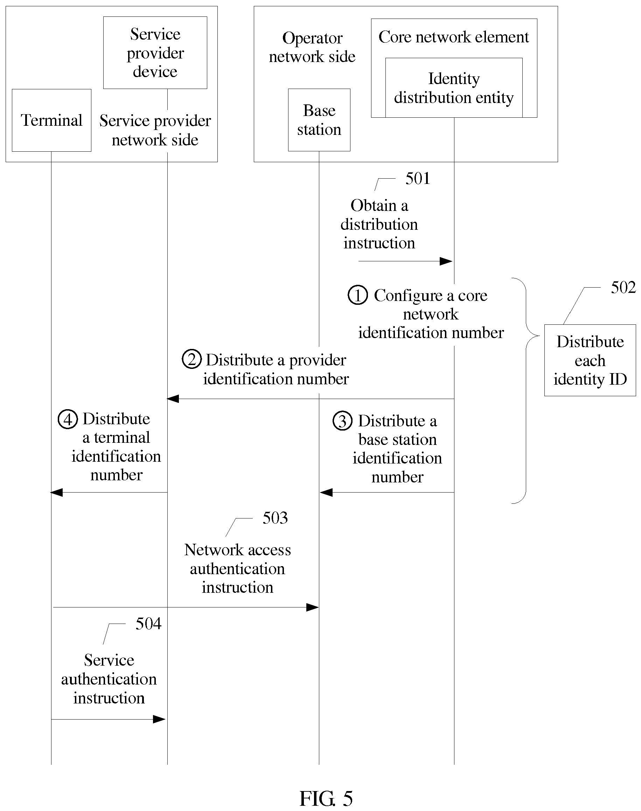

1. FIG. 5 shows an embodiment of an identification number distribution method according to an embodiment of the present invention. This embodiment of the present invention corresponds to the vertical industry user system shown in FIG. 2, and the method includes the following steps.

501. A core network element obtains a distribution instruction.

This embodiment of the present invention is described for the schematic diagram of the vertical industry user system shown in FIG. 2. An identity distribution entity is integrated in the core network element. Before the core network element obtains the distribution instruction, an operator network element receives an instruction that is sent by a service provider device or a terminal for requesting network access for a service. The instruction is received by a base station or the core network element, to trigger the identity distribution entity to distribute an identity ID. In this case, the instruction for requesting network access for a service may be considered as the distribution instruction. Alternatively, a user intends to use a service, and an identity distribution instruction is triggered when the user starts using the service, so that the identity distribution entity obtains the distribution instruction. In this case, the core network element obtains the distribution instruction.

502. According to the distribution instruction, the core network element configures a core network identification number for a core network element, distributes a provider identification number to a service provider device, and distributes a base station identification number to a base station, where the core network identification number includes first service parameter information, the provider identification number includes second service parameter information, and the base station identification number includes third service parameter information.

In this embodiment of the present invention, after obtaining the distribution instruction, according to the distribution instruction, ① the core network element configures the core network identification number for the core network element, ② distributes the provider identification number to the service provider device, and ③ distributes the base station identification number to the base station. The core network identification number includes the first service parameter information, the provider identification number includes the second service parameter information, and the base station identification number includes the third service parameter information. Specifically, the method may further include: receiving, by the service provider device, the provider identification number; receiving, by the base station, the base station identification number; and ④ receiving, by the terminal, a terminal identification number distributed by the service provider device, the base station, or the core network element. In the schematic diagram of this embodiment of the present invention, the terminal identification number is distributed by the service provider device for description, and the terminal identification number includes fourth service parameter information.

It should be noted that a sequence of ① and ② for distribution is not limited; ③ is usually performed after ①, to be specific, an identity ID of the base station is distributed after an identity ID of the core network element is configured; and ④ is usually performed after ②, to be specific, an identity ID of the terminal is obtained after an identity ID of the service provider device is distributed. The service provider device is usually referred to as an industry user for short below.

It should be understood that in addition to the service type information, each identity ID may further include other information, as shown in the following:
the core network identification number further includes at least one type of the following information: a first target entity type, a first sequence number, a first time parameter, a first mobile country code, a first mobile network code, a first reserved bit, and a first connection sign;
the provider identification number further includes at least one type of the following information: a second target entity type, a second sequence number, a second time parameter, a second mobile country code, a second mobile network code, a second reserved bit, and a second connection sign;
the base station identification number further includes at least one type of the following information: a third target entity type, a third sequence number, a third time parameter, a third mobile country code, a third mobile network code, a third reserved bit, and a third connection sign; and
the terminal identification number further includes at least one type of the following information: a fourth target entity type, a fourth sequence number, a fourth time parameter, a fourth mobile country code, a fourth mobile network code, a fourth reserved bit, and a fourth connection sign.

Each distributed identity ID herein may further include other information such as a mobile subscriber identity number MSIN or a national mobile subscriber identity NMSI. It should be noted that "first", "second", "third", and "fourth" are added before information such as the foregoing service type information, target entity type, sequence number, time parameter, mobile country code, mobile network code, reserved bit, and connection sign for differentiation when the information corresponds to different network elements. In actual application, the foregoing information included in different elements may be the same, or may be different, or may be in a relationship of a set and a subset. No specific limitation is imposed. For example, the third time parameter included in the base station identification number and the fourth time parameter included in terminal identification number may be the same, and are both June 15, 2016. It may indicate that respective identities IDs of the base station and the terminal are distributed on a same day. A second service parameter included in the provider identification number is information such as a service type set A of provided services, service authentication, or a charging standard, and a fourth service parameter included in the terminal identification number is one or more services in the service type set A. In this case, it may be considered that the fourth service parameter is a subset of the second service parameter. Other parameter information may be accordingly set based on different actual requirements. Details are not described herein. In addition, the service provider device may further control a quantity of identities IDs distributed to terminals served by the service provider device, and the core network element may also control several pieces of information such as a quantity of distributed identities IDs.

For example, (1) a format of the provider identification number or the base station identification number is shown in the following Table 2.

**Table 2**

| | | | | | | | |
|---|---|---|---|---|---|---|---|
| Industry user/base station | Mobile country code | Service parameter | Mobile network identifier | Sequence number | Valid time | Distribution time | Other information |

The industry user/base station is referred to as O/B for short, where O indicates the industry user (Organization), and B indicates the base station (Base Station). In actual application, a method for identifying an industry user/base station includes but is not limited to such an identification method. For example, the industry user/base station may be identified by using a specific value of a bit, where 1 indicates the industry user, and 2 indicates the base station.

The mobile country code: MCC, Mobile Country Code, includes three bits. Refer to the foregoing description of the MCC. Details are not described herein again.

The service parameter indicates a service type or a service level. For example, the service parameter may be an identifier used by the core network element or a public organization to sort services, and is a main service-related parameter. For different services, this field is different, to distinguish between the different services.

The mobile network identifier: MNC, Mobile Network Code, mobile network identifier, represents an operator code. A common mobile network identifier is, for example, China Unicom, China Telecom, or China Mobile.

The sequence number: Organizer Number/Base Number, is a sequence number used to identify an industry user during identity ID distribution, or is a sequence number used to identify the base station.

The valid time: Valid Time/Expiry Time, indicates valid time, expiry time, or other information of the identity ID.

The distribution time: Time, indicates issuing time or distribution time of the identity ID.

Other information: Remain. In addition to the foregoing information, other information may need to be included, for example, a specific industry user name or a base station name.

(2) A format of the core network identification number is shown in the following Table 3

**Table 3**

| | | | | | | | |
|---|---|---|---|---|---|---|---|
| Network | Mobile country code | Service parameter | Mobile network identifier | Sequence number | Valid time | Distribution time | Other information |

The network, where N indicates "network", may be identified by setting a bit value, to indicate that the identity ID is an identity ID on an operator network side. The other information is the same as above. Details are not described herein again.

(3) A format of the terminal identification number of the terminal is shown as follows:

**Table 4**

| | | | | | | | | |
|---|---|---|---|---|---|---|---|---|
| Terminal | Mobile country code | Mobile network identifier | Sequence number | Valid time | Distribution time | Other information | @ | Name |

The terminal may also be referred to as a device Device, and is usually a terminal or a device that belongs to an industry user, or may be a terminal of an operator network element.

The sequence number: Device Number, is a sequence identifier of the terminal. The sequence number is very important especially when there are massive devices. When a quantity of devices is counted, the quantity may be learned based on the sequence number as needed, and a specific reference is determined based on a service range of a service network.

The name: Service Provider, indicates a name of a service provider that provides a service for the device, or a sequence identifier of a specific service provider, including address information or the like.

@ is a connection sign, or another connection sign may be used.

It should be noted that the information included in each identity ID is not limited to the content in Table 2, Table 3, and Table 4, and the format is not limited to those shown above, and may be determined based on an actual situation. In addition to the foregoing information that needs to be indicated, the information included in the identity ID includes the following possibilities:

During allocation of a service-based identity ID, a specific operator or a specific service provider needs to be identified, and a sequence number (agreed on by service providers in advance) or a recognized code may be used. A connection sign may be used as a suffix connection sign, or may not be used. A field sequence of key information is not limited.

The target entity type may occupy a plurality of bits, and in addition to a bit for identifying the industry user, the core network element, the base station, or the terminal, a specific bit may further be set as an indication bit of a time parameter or a service code (Service Code). For example, if the bit is 0, it indicates that no time content is included; or if the bit is 1, it indicates that time parameter content is included. A main function of the bit is to indicate, in advance, whether a specific parameter needs to be reflected. Because the parameter occupies a quite large quantity of bytes, resources need to be saved. The time parameter may be any one of the distribution time, the valid time, and the expiry time provided that time validity of the identity ID can be reflected.

It should be noted that the terminal identification number herein may also be distributed by the core network element or the base station, and a format may be shown as follows:

**Table 5**

| | | | | | | | | | |
|---|---|---|---|---|---|---|---|---|---|
| Terminal | Mobile country code | Service parameter | Mobile network identifier | Sequence number | Valid time | Distribution time | Other information | @ | Name |

A specific explanation of each type of information shown in Table 5 is the same as above. Details are not described herein again. It may be understood that in specific implementation, each of the foregoing information may be indicated in a bit form by using a specific value. In the examples in Table 2, Table 3, Table 4, and Table 5, the time parameter is specifically classified into two types of information: the valid time and the distribution time. In actual application, adjustment may be performed based on different actual requirements.

It should be noted that if the industry user is an individual user, for example, the individual user has a plurality of terminals, a key attribute of the terminal may also be an integral part of the identification number. For example, parameters such as a driver's license, valid time of the driver's license, a place at which the driver's license is issued, and types of vehicles allowed for the driver's license may be considered as a part of information included in the terminal identification number.

503. The base station receives a network access authentication instruction sent by a terminal.

In this embodiment of the present invention, after the identities IDs are distributed, the terminal sends the network access authentication instruction to the base station, and the base station receives the network access authentication instruction sent by the terminal, and allows, according to the network access authentication instruction, the terminal to access a network. It should be noted that the terminal may request to access the network before an identity ID distribution procedure, or the terminal may request to access the network during service authentication. No specific limitation is imposed.

504. The service provider device receives a service authentication instruction sent by the terminal.

In this embodiment of the present invention, after the identities IDs are distributed, the terminal sends the service authentication instruction to the service provider device, and the service provider device receives the service authentication instruction sent by the terminal, and performs service authentication according to the service authentication instruction.

It should be noted that step 503 and step 504 are optional, and there is no particular sequence between the service authentication and the network access authentication. The network access authentication instruction is usually sent by the terminal to the operator network element, and an initiator and a receiver of the service authentication instruction may not be specifically limited, and may be determined based on actual application.

In this embodiment of the present invention, identity ID distribution is performed by the core network element. After obtaining the distribution instruction, according to the distribution instruction, the core network element configures the core network identification number for the core network element, distributes the provider identification number to the service provider device, and distributes the base station identification number to the base station. The terminal identification number may be distributed by the service provider device, the base station, or the core network element. A feasible solution is provided for this embodiment of the present invention, and each distributed identification number correspondingly includes service parameter information. In this way, during processing of big data, the data can be effectively classified and managed based on the service parameter information, and the service parameter information included in the identification number provides a basis for data processing compared with a prior-art identity ID that is simply used for identity identification.

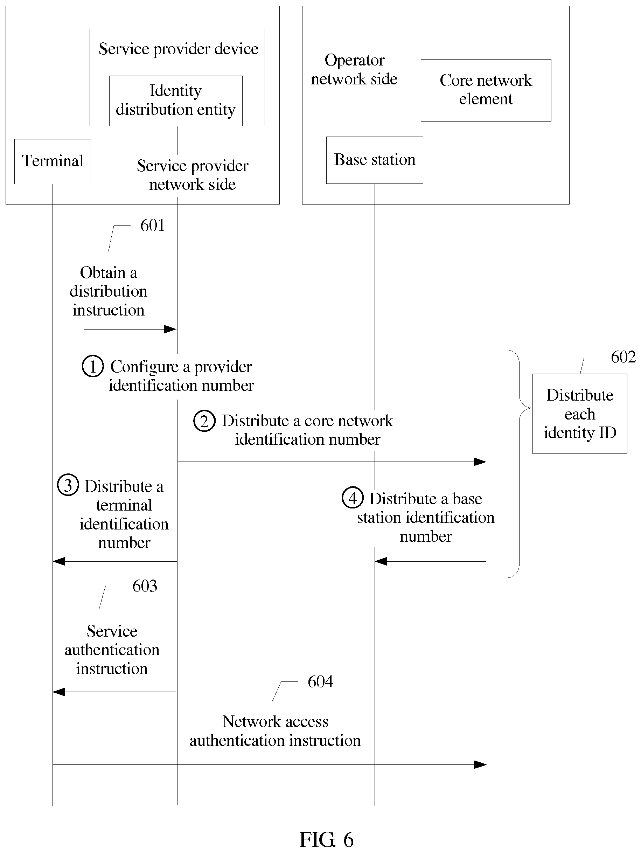

2. FIG. 6 shows another embodiment of an identification number distribution method according to an embodiment of the present invention. This embodiment of the present invention corresponds to the vertical industry user system shown in FIG. 3, and the method includes the following steps.

601. A service provider device obtains a distribution instruction.

This embodiment of the present invention is described for the schematic diagram of the vertical industry user system shown in FIG. 3. An identity distribution entity is integrated in the service provider device. Before the service provider device obtains the distribution instruction, the service provider device receives an instruction that is sent by a terminal or entered by a user for requesting network access for a service, or the like. The instruction is received by the service provider device, to trigger the identity distribution entity to distribute an identity ID, and the identity distribution entity is integrated in the service provider device. In this case, the instruction for requesting network access for a service may be considered as the distribution instruction. Alternatively, a user intends to use a service, and an identity distribution instruction is triggered when the user starts using the service, so that the identity distribution entity obtains the distribution instruction. In this case, it may be considered that the service provider device obtains the distribution instruction.

602. According to the distribution instruction, the service provider device configures a provider identification number for the service provider device, distributes a core network identification number to a core network element, and distributes a terminal identification number to a terminal, where the core network identification number includes first service parameter information, the provider identification number includes second service parameter information, and the terminal identification number includes fourth service parameter information.

In this embodiment of the present invention, after obtaining the distribution instruction, according to the distribution instruction, ① the service provider device configures the provider identification number for the service provider device, ② distributes the core network identification number to the core network element, and ③ distributes the terminal identification number to the terminal, where the terminal identification number herein may alternatively be distributed by the base station or the core network element. In the schematic diagram of this embodiment of the present invention, the terminal identification number is distributed by the service provider device for description. ④ A base station identification number is distributed by the core network element. The core network identification number includes the first service parameter information, the provider identification number includes the second service parameter information, the base station identification number includes third service parameter information, and the terminal identification number includes the fourth service parameter information.

Specifically, the method may further include: receiving, by the core network element, the core network identification number; receiving, by the base station, the base station identification number; and receiving, by the terminal, the terminal identification number. There is no particular sequence between ① and ②, and ① and ② may be performed at the same time, but ④ needs to be performed after ②, and ③ needs to be performed after ①. If there are a plurality of operator network elements, such as a server and a gateway, after ②, the core network element may distribute identities IDs to a plurality of other network elements. This is an internal implementation problem of an operator network element.

It should be understood that in addition to the service type information, each identity ID may further include other information, as shown in the following:
the core network identification number further includes at least one type of the following information: a first target entity type, a first sequence number, a first time parameter, a first mobile country code, a first mobile network code, a first reserved bit, and a first connection sign;
the provider identification number further includes at least one type of the following information: a second target entity type, a second sequence number, a second time parameter, a second mobile country code, a second mobile network code, a second reserved bit, and a second connection sign;
the base station identification number further includes at least one type of the following information: a third target entity type, a third sequence number, a third time parameter, a third mobile country code, a third mobile network code, a third reserved bit, and a third connection sign; and
the terminal identification number further includes at least one type of the following information: a fourth target entity type, a fourth sequence number, a fourth time parameter, a fourth mobile country code, a fourth mobile network code, a fourth reserved bit, and a fourth connection sign.

"First", "second", "third", and "fourth" are added before information such as the foregoing service type information, target entity type, sequence number, time parameter, mobile country code, mobile network code, reserved bit, and connection sign for differentiation when the information corresponds to different network elements. In actual application, the foregoing information included in different elements may be the same, or may be different, or may be in a relationship of a set and a subset. No specific limitation is imposed. For example, the third time parameter included in the base station identification number and the fourth time parameter included in the terminal may be the same, and are both June 15, 2016. It may indicate that respective identities IDs of the base station and the terminal are distributed on a same day. A second service parameter included in the provider identification number is information such as a service type set A of provided services, service authentication, or a charging standard, and a fourth service parameter included in the terminal identification number is one or more services in the service type set A. In this case, it may be considered that the fourth service parameter is a subset of the second service parameter. Other parameter information may be accordingly set based on different actual requirements. Details are not described herein.

For a format of the identity ID of a core network element, refer to Table 3. For formats of identities IDs of the base station and an industry user, refer to Table 2. For a format of the identity ID of the terminal, refer to Table 4 or Table 5. Details are not described herein again. It should be noted that if the industry user is an individual user, for example, the individual user has a plurality of terminals, a key attribute of the terminal may also be an integral part of the identification number. For example, parameters such as a driver's license, valid time of the driver's license, a place at which the driver's license is issued, and types of vehicles allowed for the driver's license may be considered as a part of information included in the terminal identification number.

A difference lies in that in this case, an identity ID of the service provider device, namely, the industry user, may include a specific name of a service provider, and the name is used to identify, together with the service parameter, a specific service environment that is used. In addition, the identity ID of the core network element may also include the specific name of the service provider, and the name may further be connected by using a connection sign. The specific format of the identity ID of the core network may be shown in the following Table 6:

**Table 6**

| | | | | | | | | | |
|---|---|---|---|---|---|---|---|---|---|
| Network | Mobile country code | Service parameter | Mobile network identifier | Sequence number | Valid time | Distribution time | Other information | @ | Name |

603. The terminal receives a service authentication instruction sent by the service provider device.

In this embodiment of the present invention, after the identities IDs are distributed, the service provider device sends the service authentication instruction to the terminal, and the terminal receives the service authentication instruction sent by the service provider device, and performs service authentication according to the service authentication instruction.

604. The core network element receives a network access authentication instruction sent by the terminal.

In this embodiment of the present invention, after the identities IDs are distributed, the terminal sends the network access authentication instruction to the core network element, and the core network element receives the network access authentication instruction sent by the terminal, and allows, according to the network access authentication instruction, the terminal to access a network.

It should be noted that step 603 and step 604 are optional, and there is no particular sequence between the service authentication and the network access authentication. The network access authentication instruction is usually sent by the terminal to the operator network element, and an initiator and a receiver of the service authentication instruction may not be specifically limited, and may be determined based on actual application.

In this embodiment of the present invention, identity ID distribution is performed by the service provider device. After obtaining the distribution instruction, the service provider device configures the provider identification number for the service provider device, distributes the core network identification number to the core network element, and distributes the terminal identification number to the terminal. The base station identification number of the base station may be distributed by the core network element. A feasible solution is provided for distributing an identity ID, and each identification number correspondingly includes service parameter information. In this way, during processing of big data, the data can be effectively classified and managed based on the information. In addition, the service provider device distributes an identity ID, so that with reference to the foregoing description in which the core network element distributes an identity ID, an identity ID distribution function can be correspondingly implemented based on different cases.

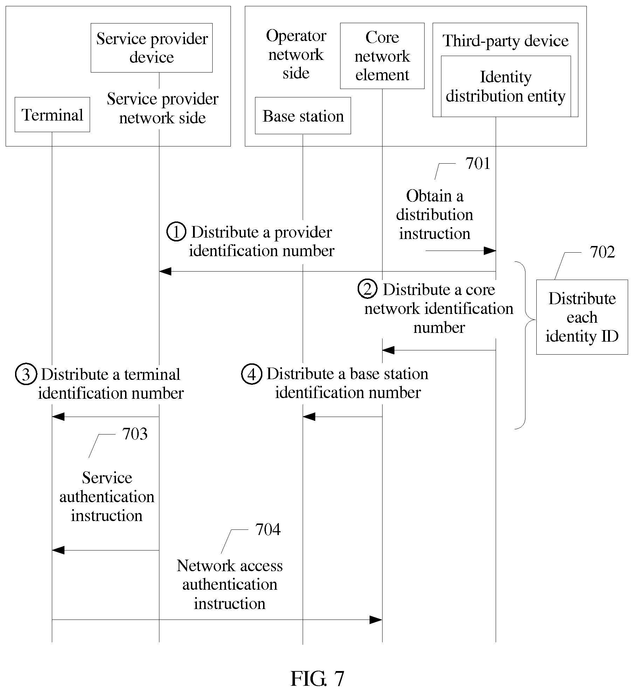

3. FIG. 7 shows another embodiment of an identification number distribution method according to an embodiment of the present invention. This embodiment of the present invention corresponds to the vertical industry user system shown in FIG. 4, and the method includes the following steps.

701. A third-party device obtains a distribution instruction.

This embodiment of the present invention is described for the schematic diagram of the vertical industry user system shown in FIG. 4. An identity distribution entity is integrated in the third-party device. Before obtaining the distribution instruction, the third-party device receives an instruction that is sent by a terminal or a service provider device for requesting network access for a service, an instruction that is entered by a user for requesting network access for a service, or the like. The instruction is received by the third-party device, to trigger the identity distribution entity to distribute an identity ID, and the identity distribution entity is integrated in the third-party device. In this case, the instruction for requesting network access for a service may be considered as the distribution instruction. Alternatively, a user intends to use a service, and an identity distribution instruction is triggered when the user starts using the service, so that the identity distribution entity obtains the distribution instruction. In this case, it may be considered that the third-party device obtains the distribution instruction.

The third-party device herein is described in detail above. Details are not described herein again.

702. According to the distribution instruction, the third-party device distributes a provider identification number to a service provider device, and distributes a core network identification number to a core network element, where the core network identification number includes first service parameter information, and the provider identification number includes second service parameter information.

In this embodiment of the present invention, a main difference lies in that the identity distribution entity is integrated in the third-party device, after obtaining the distribution instruction, according to the distribution instruction, ① the third-party device distributes the provider identification number to the service provider device, and ② distributes the core network identification number to the core network element. The core network identification number includes the first service parameter information, and the provider identification number includes the second service parameter information.

Specifically, the method may further include: receiving, by the service provider device, the provider identification number; receiving, by the core network element, the core network identification number, and distributing a base station identification number to a base station; ④, receiving, by the base station, the base station identification number; and ③ receiving, by the terminal, a terminal identification number distributed by the service provider device, the base station, or the core network element, where the base station identification number includes third service parameter information, and the terminal identification number includes fourth service parameter information. In the schematic diagram of this embodiment of the present invention, the terminal identification number is distributed by the service provider device for description.

It should be noted that a sequence of ① and ② for distribution is not limited; ③ is usually performed after ①; and ④ is usually performed after ②. If there are a plurality of operator network elements, such as a server and a gateway, after ②, the core network element may further distribute identities IDs to a plurality of other network elements.

It should be understood that in addition to the service type information, each identity ID may further include other information, as shown in the following:
the core network identification number further includes at least one type of the following information: a first target entity type, a first sequence number, a first time parameter, a first mobile country code, a first mobile network code, a first reserved bit, and a first connection sign;
the provider identification number further includes at least one type of the following information: a second target entity type, a second sequence number, a second time parameter, a second mobile country code, a second mobile network code, a second reserved bit, and a second connection sign;
the base station identification number further includes at least one type of the following information: a third target entity type, a third sequence number, a third time parameter, a third mobile country code, a third mobile network code, a third reserved bit, and a third connection sign; and
the terminal identification number further includes at least one type of the following information: a fourth target entity type, a fourth sequence number, a fourth time parameter, a fourth mobile country code, a fourth mobile network code, a fourth reserved bit, and a fourth connection sign.

"First", "second", "third", and "fourth" are added before information such as the foregoing service type information, target entity type, sequence number, time parameter, mobile country code, mobile network code, reserved bit, and connection sign for differentiation when the information corresponds to different network elements. In actual application, the foregoing information included in different elements may be the same, or may be different, or may be in a relationship of a set and a subset. No specific limitation is imposed. For example, the third time parameter included in the base station identification number and the fourth time parameter included in the terminal may be the same, and are both three years. It may indicate that valid time of the identity ID of each of the base station and the terminal is three years. A second service parameter included in the provider identification number is information such as a service type set A of provided services, service authentication, a charging standard, and a fourth service parameter included in the terminal identification number is one or more services in the service type set A. In this case, it may be considered that the fourth service parameter is a subset of the second service parameter. Other parameter information may be accordingly set based on different actual requirements. Details are not described herein.

For a format of an identity ID of a core network, refer to Table 3. For formats of identities IDs of the base station and an industry user, refer to Table 2. For a format of the identity ID of the terminal, refer to Table 4 or Table 5. Details are not described herein again. It should be noted that if the industry user is an individual user, for example, the individual user has a plurality of terminals, a key attribute of the terminal may also be an integral part of the identification number. For example, parameters such as a driver's license, valid time of the driver's license, a place at which the driver's license is issued, and types of vehicles allowed for the driver's license may be considered as a part of information included in the terminal identification number.

It should be noted that an identity ID of the service provider device (industry user) and the identity ID of the terminal may not include a service parameter, but the identity ID of the terminal may include a name of a service provider. It is optimal that the identity ID of the core network element and the identity ID of the base station include a service parameter, to reflect a service provided by the operator network element.

703. A terminal receives a service authentication instruction sent by the service provider device.

704. The core network element receives a network access authentication instruction sent by the terminal.

In this embodiment of the present invention, step 703 and step 704 are optional, and step 703 and step 704 are the same as step 603 and step 604 shown in FIG. 6. Details are not described herein again. It should be noted that the network access authentication instruction is usually sent by the terminal to the operator network element, and an initiator and a receiver of the service authentication instruction may not be specifically limited, and may be determined based on actual application.

In this embodiment of the present invention, identity ID distribution is performed by the third-party device. A feasible solution is further provided for distributing an identity ID. After obtaining the distribution instruction, the third-party device distributes the provider identification number to the service provider device, and distributes the core network identification number to the core network element. Each identification number correspondingly includes service parameter information. In this way, during processing of big data, the data can be effectively classified and managed based on the information. In addition, the service provider device distributes an identity ID, so that with reference to the foregoing description in which the core network element or the service provider device distributes an identity ID, an identity ID distribution function can be correspondingly implemented based on different cases.

The foregoing describes the identification number distribution method in the embodiments of the present invention, and the following separately describes the core network element, the service provider device, and the third-party device in the embodiments of the present invention.

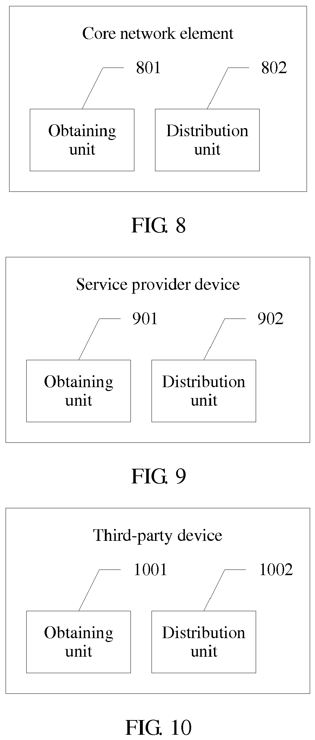

FIG. 8 is a schematic diagram of an embodiment of a core network element according to an embodiment of the present invention. The core network element is applied to a vertical industry user system, the vertical industry user system includes a service provider device, a terminal, the core network element, and a base station, and the core network element includes:
an obtaining unit 801, configured to perform step 501 in FIG. 5; and
a distribution unit 802, configured to perform step 502 in FIG. 5.

Optionally, in some embodiments of the present invention,
the core network identification number further includes at least one type of the following information: a first target entity type, a first sequence number, a first time parameter, a first mobile country code, a first mobile network code, a first reserved bit, and a first connection sign;
the provider identification number further includes at least one type of the following information: a second target entity type, a second sequence number, a second time parameter, a second mobile country code, a second mobile network code, a second reserved bit, and a second connection sign; and
the base station identification number further includes at least one type of the following information: a third target entity type, a third sequence number, a third time parameter, a third mobile country code, a third mobile network code, a third reserved bit, and a third connection sign.

FIG. 9 is a schematic diagram of an embodiment of a service provider device according to an embodiment of the present invention. The service provider device is applied to a vertical industry user system, the vertical industry user system includes the service provider device, a terminal, a core network element, and a base station, and the service provider device includes:
an obtaining unit 901, configured to perform step 601 in FIG. 6; and
a distribution unit 902, configured to perform step 602 in FIG. 6.

Optionally, in some embodiments of the present invention,
the core network identification number further includes at least one type of the following information: a first target entity type, a first sequence number, a first time parameter, a first mobile country code, a first mobile network code, a first reserved bit, and a first connection sign;
the provider identification number further includes at least one type of the following information: a second target entity type, a second sequence number, a second time parameter, a second mobile country code, a second mobile network code, a second reserved bit, and a second connection sign; and
the terminal identification number further includes at least one type of the following information: a fourth target entity type, a fourth sequence number, a fourth time parameter, a fourth mobile country code, a fourth mobile network code, a fourth reserved bit, and a fourth connection sign.

FIG. 10 is a schematic diagram of an embodiment of a third-party device according to an embodiment of the present invention. The third-party device is applied to a vertical industry user system, the vertical industry user system includes a service provider device, a terminal, a core network element, a base station, and the third-party device, and the third-party device includes:
an obtaining unit 1001, configured to perform step 701 in FIG. 7; and
a distribution unit 1002, configured to perform step 702 in FIG. 7.

Optionally, in some embodiments of the present invention,
the core network identification number further includes at least one type of the following information: a first target entity type, a first sequence number, a first time parameter, a first mobile country code, a first mobile network code, a first reserved bit, and a first connection sign; and
the provider identification number further includes at least one type of the following information: a second target entity type, a second sequence number, a second time parameter, a second mobile country code, a second mobile network code, a second reserved bit, and a second connection sign.

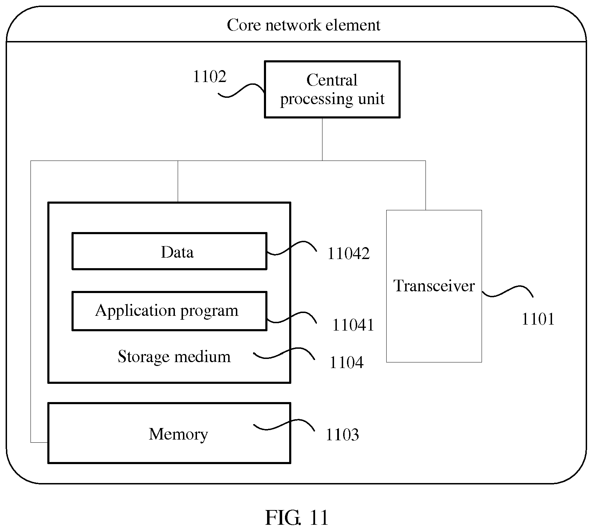

FIG. 11 is a schematic diagram of another embodiment of a core network element according to an embodiment of the present invention.

The core network element may vary greatly due to a difference in configuration or performance. The core network element may include a transceiver 1101, one or more central processing units (CPU) 1102 (for example, one or more processors), a memory 1103, and one or more storage media 1104 (for example, one or more massive storage devices) for storing an application program 11041 or data 11042. The memory 1103 and the storage medium 1104 may be temporary storage or permanent storage. The program stored in the storage medium 1104 may include one or more modules (not shown in FIG. 11), and each module may include a series of instruction operations to be performed on the core network element. Further, the central processing unit 1102 may be configured to communicate with the storage medium 1104 to perform, on the core network element, a series of instruction operations in the storage medium 1104.

In this embodiment of the present invention, correspondingly, the transceiver 1101 is configured to obtain a distribution instruction; and
the central processing unit 1102 is configured to: according to the distribution instruction, configure a core network identification number for the core network element, distribute a provider identification number to a service provider device, and distribute a base station identification number to a base station, where the core network identification number includes first service parameter information, the provider identification number includes second service parameter information, and the base station identification number includes third service parameter information.

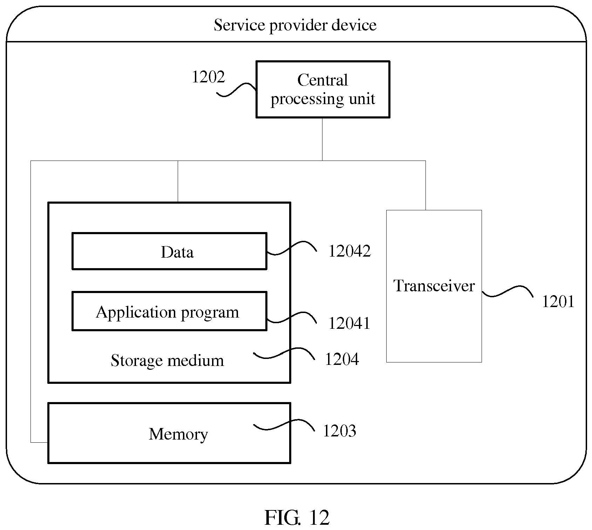

FIG. 12 is a schematic diagram of another embodiment of a service provider device according to an embodiment of the present invention.

The service provider device may vary greatly due to a difference in configuration or performance. The service provider device may include a transceiver 1201, one or more central processing units (central processing units, CPU) 1202 (for example, one or more processors), a memory 1203, and one or more storage media 1204 (for example, one or more mass storage devices) for storing an application program 12041 or data 12042. The memory 1203 and the storage medium 1204 may be temporary storage or permanent storage. The program stored in the storage medium 1204 may include one or more modules (not shown in FIG. 12), and each module may include a series of instruction operations to be performed on the service provider device. Further, the central processing unit 1202 may be configured to communicate with the storage medium 1204 to perform, on the service provider device, a series of instruction operations in the storage medium 1204.

In this embodiment of the present invention, correspondingly, the transceiver 1201 is configured to obtain a distribution instruction; and
the central processing unit 1202 is configured to: according to the distribution instruction, configure a provider identification number for the service provider device, distribute a core network identification number to a core network element, and distribute a terminal identification number to a terminal, where the core network identification number includes first service parameter information, the provider identification number includes second service parameter information, and the terminal identification number includes fourth service parameter information.

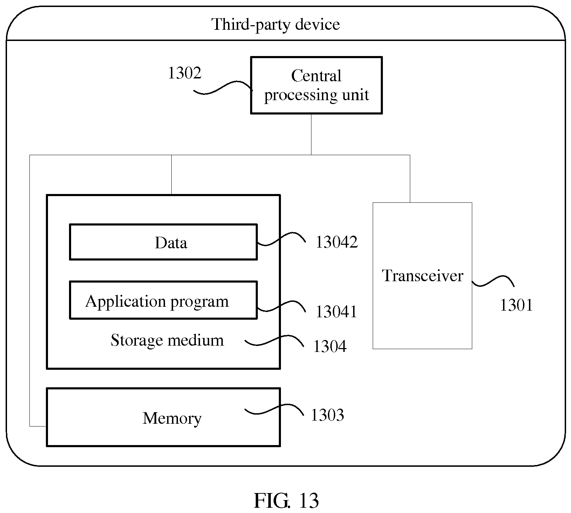

FIG. 13 is a schematic diagram of another embodiment of a third-party device according to an embodiment of the present invention.

The third-party device may vary greatly due to a difference in configuration or performance. The third-party device may include a transceiver 1301, one or more central processing units (central processing units, CPU) 1302 (for example, one or more processors), a memory 1303, and one or more storage media 1304 (for example, one or more mass storage devices) for storing an application program 13041 or data 13042. The memory 1303 and the storage medium 1304 may be temporary storage or permanent storage. The program stored in the storage medium 1304 may include one or more modules (not shown in FIG. 13), and each module may include a series of instruction operations to be performed on third-party device. Further, the central processing unit 1302 may be configured to communicate with the storage medium 1304 to perform, on the third-party device, a series of instruction operations in the storage medium 1304.

In this embodiment of the present invention, correspondingly, the transceiver 1301 is configured to obtain a distribution instruction; and
the central processing unit 1302 is configured to: according to the distribution instruction, distribute a provider identification number to a service provider device, and distribute a core network identification number to a core network element, where the core network identification number includes first service parameter information, and the provider identification number includes second service parameter information.

It may be clearly understood by persons skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the present invention as set forth in the appended claims.

## Claims

1. A vertical industry user system, comprising a service provider device and a core network element, wherein
the core network element is configured to: obtain a distribution instruction; and according to the distribution instruction, configure a core network identification number for the core network element, distribute a provider identification number to the service provider device; and
the service provider device is configured to receive the provider identification number, wherein the core network identification number comprises first service parameter information, wherein the provider identification number comprises second service parameter information, further comprising a base station, wherein
the core network element is configured to: distribute a base station identification number to the base station; and
the base station is configured to receive the base station identification number, wherein the base station identification number comprises third service parameter information., further comprising a terminal, wherein
the terminal is configured to receive a terminal identification number distributed by the service provider device,
wherein the terminal identification number comprises fourth service parameter information, and
**characterized in that**
the core network identification number further comprises at least a first time parameter;
the provider identification number further comprises at least a second time parameter;
the base station identification number further comprises at least a third time parameter; and
the terminal identification number further comprises at least a fourth time parameter.

2. The vertical industry user system according to claim 1, wherein
the core network identification number further comprises at least one type of the following information: a first target entity type, a first sequence number, a first mobile country code, a first mobile network code, a first reserved bit, and a first connection sign;
the provider identification number further comprises at least one type of the following information: a second target entity type, a second sequence number, a second mobile country code, a second mobile network code, a second reserved bit, and a second connection sign;
the base station identification number further comprises at least one type of the following information: a third target entity type, a third sequence number, a third mobile country code, a third mobile network code, a third reserved bit, and a third connection sign; and
the terminal identification number further comprises at least one type of the following information: a fourth target entity type, a fourth sequence number, a fourth mobile country code, a fourth mobile network code, a fourth reserved bit, and a fourth connection sign.

3. A core network element, wherein the core network element is configured to be applied to a vertical industry user system, the vertical industry user system comprises a service provider device, the core network element, and a base station, and the core network element comprises:
an obtaining unit (801), configured to obtain a distribution instruction; and
a distribution unit (802), configured to: according to the distribution instruction, configure a core network identification number for the core network element, and distribute a provider identification number to the service provider device and a base station identification number to the base station, wherein the core network identification number comprises first service parameter information, the provider identification number comprises second service parameter information, and the base station identification number comprises third service parameter information
**characterized in that**
the core network identification number further comprises at least a first time parameter;
the provider identification number further comprises at least a second time parameter; and
the base station identification number further comprises at least a third time parameter.

## Patentansprüche

1. Vertikales Industrieanwendersystem, das eine Serviceprovidervorrichtung und ein Kernnetzwerkelement umfasst, wobei
das Kernnetzwerkelement zu Folgendem konfiguriert ist: Erhalten einer Verteilungsanweisung; und Konfigurieren einer Kernnetzwerkidentifikationsnummer für das Kernnetzwerkelement nach der Verteilungsanweisung, Verteilen einer Provideridentifikationsnummer an die Serviceprovidervorrichtung; und
die Serviceprovidervorrichtung dazu konfiguriert ist, die Provideridentifikationsnummer zu empfangen, wobei die Kernnetzwerkidentifikationsnummer erste Serviceparameterinformationen umfasst, wobei die Provideridentifikationsnummer zweite Serviceparameterinformationen umfasst, und ferner eine Basisstation umfasst, wobei
das Kernnetzwerkelement zu Folgendem konfiguriert ist: Verteilen einer Basisstationsidentifikationsnummer an die Basisstation; und
die Basisstation dazu konfiguriert ist, die Basisstationsidentifikationsnummer zu empfangen, wobei die Basisstationsidentifikationsnummer dritte Serviceparameterinformationen umfasst, und ferner ein Endgerät umfasst, wobei
das Endgerät dazu konfiguriert ist, eine durch die Serviceprovidervorrichtung verteilte Endgerätidentifikationsnummer zu empfangen,
wobei die Endgerätidentifikationsnummer vierte Serviceparameterinformationen umfasst, und
**dadurch gekennzeichnet ist, dass**
die Kernnetzwerkidentifikationsnummer ferner mindestens einen ersten Zeitparameter umfasst;
die Provideridentifikationsnummer ferner mindestens einen zweiten Zeitparameter umfasst;
die Basisstationsidentifikationsnummer ferner mindestens einen dritten Zeitparameter umfasst; und
die Endgerätidentifikationsnummer ferner mindestens einen vierten Zeitparameter umfasst.

2. Vertikales Industrieanwendersystem nach Anspruch 1, wobei
die Kernnetzwerkidentifikationsnummer ferner mindestens einen Typ der folgenden Informationen umfasst: einen ersten Zielentitätstyp, eine erste Sequenznummer, einen ersten Mobilländercode, eine erste Mobilfunknetzkennzahl, einen ersten reservierten Bit und ein erstes Verbindungszeichen;
die Provideridentifikationsnummer ferner mindestens einen Typ der folgenden Informationen umfasst: einen zweiten Zielentitätstyp, eine zweite Sequenznummer, einen zweiten Mobilländercode, eine zweite Mobilfunknetzkennzahl, einen zweiten reservierten Bit und ein zweites Verbindungszeichen;
die Basisstationsidentifikationsnummer ferner mindestens einen Typ der folgenden Informationen umfasst: einen dritten Zielentitätstyp, eine dritte Sequenznummer, einen dritten Mobilländercode, eine dritte Mobilfunknetzkennzahl, einen dritten reservierten Bit und ein drittes Verbindungszeichen; und
die Endgerätidentifikationsnummer ferner mindestens einen Typ der folgenden Informationen umfasst: einen vierten Zielentitätstyp, eine vierte Sequenznummer, einen vierten Mobilländercode, eine vierte Mobilfunknetzkennzahl, einen vierten reservierten Bit und ein viertes Verbindungszeichen.

3. Kernnetzwerkelement, wobei das Kernnetzwerkelement dazu konfiguriert ist, für ein vertikales Industrieanwendersystem verwendet zu werden, wobei das vertikale Industrieanwendersystem eine Serviceprovidervorrichtung, das Kernnetzwerkelement und eine Basisstation umfasst, wobei das Kernnetzwerkelement Folgendes umfasst:
eine Erhaltungseinheit (801), die dazu konfiguriert ist, eine Verteilungsanweisung zu erhalten; und
eine Verteilungseinheit (802), die zu Folgendem konfiguriert ist: Konfigurieren einer Kernnetzwerkidentifikationsnummer für das Kernnetzwerkelement nach der Verteilungsanweisung und Verteilen einer Provideridentifikationsnummer an die Serviceprovidervorrichtung und einer Basisstationsidentifikationsnummer an die Basisstation, wobei die Kernnetzwerkidentifikationsnummer erste Serviceparameterinformationen umfasst, wobei die Provideridentifikationsnummer zweite Serviceparameterinformationen umfasst und wobei die Basisstationsidentifikationsnummer dritte Serviceparameterinformationen umfasst,
**dadurch gekennzeichnet, dass**
die Kernnetzwerkidentifikationsnummer ferner mindestens einen ersten Zeitparameter umfasst;
die Provideridentifikationsnummer ferner mindestens einen zweiten Zeitparameter umfasst; und
die Basisstationsidentifikationsnummer ferner mindestens einen dritten Zeitparameter umfasst.

## Revendications

1. Système d'utilisateur d'industrie verticale, comprenant un dispositif de fournisseur de services et un élément de réseau central, dans lequel
l'élément de réseau central est configuré pour : obtenir une instruction de distribution ; et selon l'instruction de distribution, configurer un numéro d'identification de réseau central pour l'élément de réseau central, distribuer un numéro d'identification de fournisseur au dispositif de fournisseur de services ; et
le dispositif de fournisseur de services est configuré pour recevoir le numéro d'identification de fournisseur, dans lequel le numéro d'identification de réseau central comprend des premières informations de paramètre de service, dans lequel le numéro d'identification de fournisseur comprend des deuxièmes informations de paramètre de service, comprenant en outre une station de base, dans lequel
l'élément de réseau central est configuré pour : distribuer un numéro d'identification de station de base à la station de base ; et
la station de base est configurée pour recevoir le numéro d'identification de station de base, dans lequel le numéro d'identification de station de base comprend des troisièmes informations de paramètre de service, comprenant en outre un terminal, dans lequel
le terminal est configuré pour recevoir un numéro d'identification de terminal distribué par le dispositif de fournisseur de services,
dans lequel le numéro d'identification de terminal comprend des quatrièmes informations de paramètre de service, et
**caractérisé en ce que**
le numéro d'identification de réseau central comprend en outre au moins un premier paramètre de temps ;
le numéro d'identification de fournisseur comprend en outre au moins un deuxième paramètre de temps ;
le numéro d'identification de station de base comprend en outre au moins un troisième paramètre de temps ; et
le numéro d'identification de terminal comprend en outre au moins un quatrième paramètre de temps.

2. Système d'utilisateur d'industrie verticale selon la revendication 1, dans lequel
le numéro d'identification de réseau central comprend en outre au moins un type des informations suivantes : un premier type d'entité cible, un premier numéro de séquence, un premier code de pays mobile, un premier code de réseau mobile, un premier bit réservé et un premier signe de connexion ;
le numéro d'identification de fournisseur comprend en outre au moins un type des informations suivantes : un deuxième type d'entité cible, un deuxième numéro de séquence, un deuxième code de pays mobile, un deuxième code de réseau mobile, un deuxième bit réservé et un deuxième signe de connexion ;
le numéro d'identification de station de base comprend en outre au moins un type des informations suivantes : un troisième type d'entité cible, un troisième numéro de séquence, un troisième code de pays mobile, un troisième code de réseau mobile, un troisième bit réservé et un troisième signe de connexion ; et
le numéro d'identification de terminal comprend en outre au moins un type des informations suivantes : un quatrième type d'entité cible, un quatrième numéro de séquence, un quatrième code de pays mobile, un quatrième code de réseau mobile, un quatrième bit réservé et un quatrième signe de connexion.

3. Elément de réseau central, dans lequel l'élément de réseau central est configuré pour être appliqué à un système d'utilisateur d'industrie verticale, le système d'utilisateur d'industrie verticale comprend un dispositif de fournisseur de services, l'élément de réseau central et une station de base, et l'élément de réseau central comprend :
une unité d'obtention (801), configurée pour obtenir une instruction de distribution ; et
une unité de distribution (802), configurée pour : selon l'instruction de distribution, configurer un numéro d'identification de réseau central pour l'élément de réseau central, et distribuer un numéro d'identification de fournisseur au dispositif de fournisseur de services et un numéro d'identification de station de base à la station de base, dans lequel le numéro d'identification de réseau central comprend des premières informations de paramètre de service, le numéro d'identification de fournisseur comprend des deuxièmes informations de paramètre de service, et le numéro d'identification de station de base comprend des troisièmes informations de paramètre de service
**caractérisé en ce que**
le numéro d'identification de réseau central comprend en outre au moins un premier paramètre de temps ;
le numéro d'identification de fournisseur comprend en outre au moins un deuxième paramètre de temps ; et
le numéro d'identification de station de base comprend en outre au moins un troisième paramètre de temps.
